# EUROPEAN PATENT SPECIFICATION

(11) **EP 1 967 939 B1**
(45) Date of publication and mention of the grant of the patent: **30.03.2011**
(21) Application number: 08101350.0
(22) Date of filing: 07.02.2008
(51) Int. Cl.: G06F 1/24, G06F 11/00

(54) **Method and circuit for controlling the reset operation of a microcontroller or microprocessor system**
Verfahren und Vorrichtung zur Steuerung der Zurücksetzung eines Mikrocontroller- oder Mikroprozessorsystems
Procédé et circuit pour contrôler l'opération de réinitialisation d'un microcontrôleur ou système de microprocesseur

(30) Priority: 06.03.2007 TR 200701377
(43) Date of publication of application: 10.09.2008
(73) Proprietor: Vestel Elektronik Sanayi ve Ticaret A.S., 45030 Manisa (TR)
(72) Inventor: Sariarslan, Muhammed Kursat, 45030 Manisa (TR)
(74) Representative: Cayli, Hülya

(56) References cited:
- US-A- 5 564 010
- US-A- 5 696 979
- US-A1- 2005 038 924
- US-A1- 2007 050 685
- US-B1- 6 393 558

## Description

### Technical Field

This invention relates to a method and circuit for controlling the reset operation of a microcontroller or microprocessor system, particularly in a system crash.

### Prior Art

In case of system crushes, the user is supposed to reset the system manually by means of switching the system on/off or pushing reset button, if there is any. The most common method to automatically prevent the system crash without user command is to use a software protection, such as "the watch dog timer".

Resetting circuits for microprocessors have been known for a long time in which the microprocessor is put in a defined output stage when the voltage supply is applied. Also resetting circuits have already been suggested for resetting of the microprocessor if the program stored in the microprocessor is not properly operated.

An example of system which periodically controls input signals and responses in error conditions is disclosed in US5051936. This patent application describes a microprocessor-based controller apparatus for executing a linear program in synchrony with a recurring signal coupled to the reset terminal of the microprocessor.

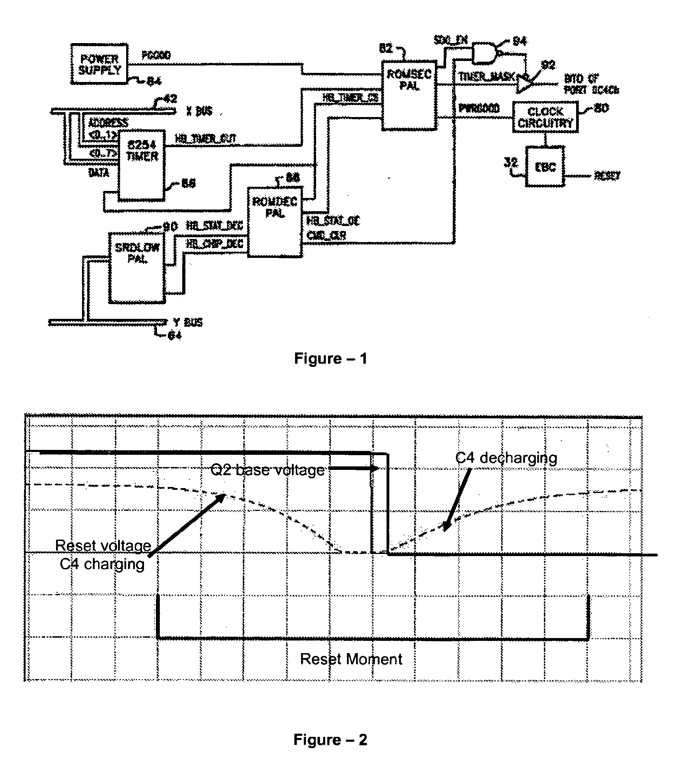

Another example of system which uses external timers is disclosed in US5390324. This system basically expects microprocessor to reset pre-set timer in order to avoid failure if the microprocessor can not reset the timer. The timer resets the processors, as basically seen in figure 1.

Both systems described above are not reliable for all cases. For example in some computed systems, during instantaneous power switching, some energy may still be conserved in main power supply units. For arbitrary switching on/off conditions, due to said conservation of energy in power supply units, the supply voltages for main microprocessor and some peripherals may stay high although the system is shut down. This condition causes problems if the system is restarted soon after switching off. In these conditions, some peripherals may fail to contact with microcontroller, and even microcontroller may fail to re-operate. A complete failure may occur and the system may be needed to reset manually by user if there is any reset button.

### Brief Summary of the Invention

The embodiments of the present invention provide a circuit for controlling the reset operation of a microcontroller or microprocessor system which offers advantages for the state of the art. Accordingly, the invention also provide solutions to software and/or hardware based system crashes and software protection and provide a system which operates in an automated manner and gives solutions to system crashes without manual support.

According to the present invention, the circuit for controlling the reset operation of a microcontroller or microprocessor system, comprises means (Q8, Q13) for receiving input signals coming from user interface devices, said input signals being able to determine reset conditions of said microcontroller or microprocessor system; means (D8, D9, Q2, Q7) for triggering the input signals received from said remote devices and generating an activation signal for a reset port of the microcontroller or microprocessor system, determining said reset operation; and means (Q9, Q10, Q11, Q12) for enabling said means for triggering on the basis of a status signal coming from said microcontroller or microprocessor system, said status signal being indicative of a failure status of the microcontroller or microprocessor system, said means for enabling said triggering means comprise feedback means (Q9, Q11, Q10) receiving said activation signal for said reset port and generating a feedback signal for said enabling of said means for triggering; input means (Q12) receiving said status signal enabling said feedback means to supply said feedback signal to said means for triggering, when said status signal is indicative of a failure status;

Preferably, said user interface devices are remote devices or keypads.
And reset timing means (C4, R14), determining a reset timing delay for said activation of said reset port.
   and
reset canceling timing means (C2, R21) determining a reset cancelling timing delay for said feedback means.

Therefore in accordance with the present invention, a method for controlling the reset operation of a microcontroller or microprocessor system comprises the following steps:
- receiving input signals coming from one or more user interface devices, said input signals being able to determine reset conditions of said microcontroller or microprocessor system;
- triggering the input signals received from said remote devices and generating an activation signal for a reset function of the microcontroller or microprocessor system, determining said reset operation;
- enabling said triggering on the basis of a status signal coming from said microcontroller or microprocessor system, said status signal being indicative of a failure status of the microcontroller or microprocessor system, wherein said step of enabling the triggering comprises the further steps of :
   - receiving via feedback means in the activation signal for said reset port and generating a feedback signal for said enabling of said triggering means;
   - receiving via input means said status signal enabling said feedback means to supply said feedback signal to said triggering means, when said status signal is indicative of a failure status;
   - determining via reset timing means a reset timing delay for the activation of the reset port.
   - determining via reset cancelling timing means a reset cancelling timing delay for said feedback means.

### Object of the Invention

The object of the present invention is to provide a circuit as defined in claim 1 and method as defined in claim 3 the reset operation of a microcontroller or microprocessor system, particularly in a system crash in order to solve software and/or hardware based system crashes and software protection.

The two-part form of the independent claims bases on the features which are known from document US 2005/0038924

It is a further object of the present invention to provide a system which operates in an automated manner and gives solutions to system crashes without manual support

### Brief Description of the Drawings

The invention is illustrated in the appended figures, in which;
Figure 1 is a block diagram of the automatic system recovery control circuitry for resetting the computer system in the event of a system crush. Figure 2 is a chart diagram showing reset voltages for (C4) capacitor and (Q2) transistor.
Figure 3 is a diagram showing an exemplary circuit to introduce operation principle of the invention.
Figure 4 is a block diagram showing the system to reset microcontroller from a hardware circuit.

### Detailed Description of the intention

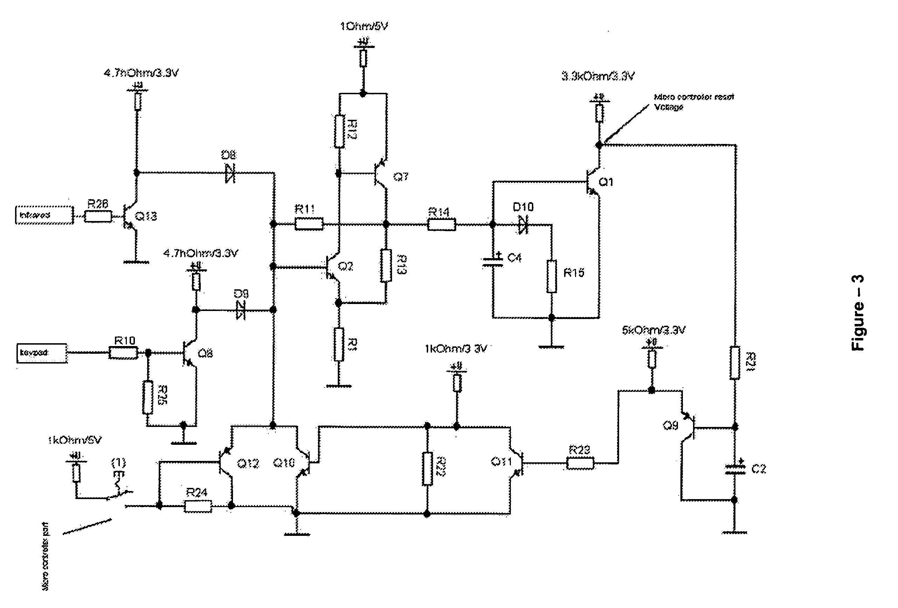

An exemplary circuit to introduce operation principle of the present invention is shown in figure 3.

The operation principle of the invention will be explained step by step.

Initially, energy is released to the system by means of switching the power on. In normal operation conditions as (Q8) and (Q13) transistors are in active stage, (D8) and (D9) diodes have zero voltage in their anodes. In this instance (Q2) and (Q7) transistors are deactivated, that's the reason why there is no voltage on (R14) resistor and the collector of (Q1) transistor has approximately 3.3 V voltage level. In this instance there is no intervention to reset voltage.

The part in figure 2, starting with (Q9) transistor, including (Q10) and (Q11) transistors, forms the feedback path. The 3.3V voltage level on (R21) resistor holds (Q9) transistor deactivated.

The microcontroller is coupled to the base of (Q12) transistor. This coupled port becomes high by means of initial supply voltages and stays in that position unless there is no interference from microprocessor.

If the system has collapsed and does not response in that instance, whenever user uses remote controller or key-pad, an electronic signal is produced by keypad or infrared circuits. The signal coming from keypad or infrared circuit is inverted by (Q8) and (Q13) transistors and transferred to other block via (D8) and (D9) diodes and high level occurs on base of (Q2) transistor. Once enough voltage level occurs on the base of (Q2), then (Q2) and also (Q7) are activated. After that, even if there is no signal coming from keypad or infrared circuit, (Q2) and (Q7) transistors stay in active stage. Because if (Q2) is activated then the base of (Q7) becomes low on (R1) resistor, since (Q7) is a PNP type transistor, (Q7) becomes active. After (Q7) transistor is activated then the voltage level of 5V supplies the base of (Q2) transistor via (R11) resistor. By this way a close loop occurs between (Q2) and (Q7) transistors.

In this instance, (C4) capacitor charges on (R14) resistor. The charging time depends on the values of (R14) resistor and (C4) capacitor and said charging time can be determined. After some time, the voltage on (C4) capacitor becomes enough to activate (Q1) transistor. When (Q1) transistor is activated, then the reset port of microcontroller becomes low and the controller goes into the reset mode.

In order to reset microcontroller, the reset port must be high again after some time. To achieve this, the circuit which is responsible for driving the reset port to low level must be stopped. For this purpose a feedback circuit is designed.

When (Q1) transistor is active then (Q9) transistor becomes active after some time because charged (C2) capacitor starts to discharge on (R21) and (Q1) transistor. When the voltage on (C4) capacitor is low enough, then (Q9) transistor becomes active, (Q11) transistor becomes off and (Q10) transistor becomes active. At this time, the base of (Q2) transistor is driven to low level and (Q2) transistor becomes off. During the discharge moment of (C2) capacitor, the reset port of controller stays in low level. It means that (C2) capacitor and (R21) resistor define the duration of the reset time.

After (Q2) transistor is turned off the close loop stops and current flow on (Q7) transistor also stops. At this time, (C4) capacitor starts to discharge on (D10) diode and (R15) resistor. After some time, the voltage on (C4) capacitor can't drive (Q1) transistor and therefore (Q1) transistor is turned off. It means that the reset port of micro controller becomes high. When this port is high then (Q9) transistor becomes off and feedback circuit stops.

This process resets the microcontroller. If the controller is reset with hardware then software is also reset and the system restarts.

When the system is working properly, user may use remote controller and/or user interface device or keypad. At this time, the circuit will start to reset procedure. In order to prevent this, the circuit must be stopped and a software code is used to achieve this. This code changes the status of the microcontroller port (shown in figure 3) from high to low for a moment By this way the reset procedure is stopped and the system goes on.

- As for details of canceling the reset procedure, when the software changes the status of the microcontroller port from high to low, (Q12) transistor becomes active. As soon as Q12 transistor becomes active then the base port of (Q2) becomes low and (Q2) transistor is turned off. Since the transistors (Q2) and also (Q7) are turned off, (C4) capacitor can't charge enough to turn (Q1) transistor on. If (Q1) transistor is off then the reset port status remains unchanged. It means that software can control the reset procedure. The reset voltages for (C4) capacitor and (Q2) transistor are depicted in Figure 2.

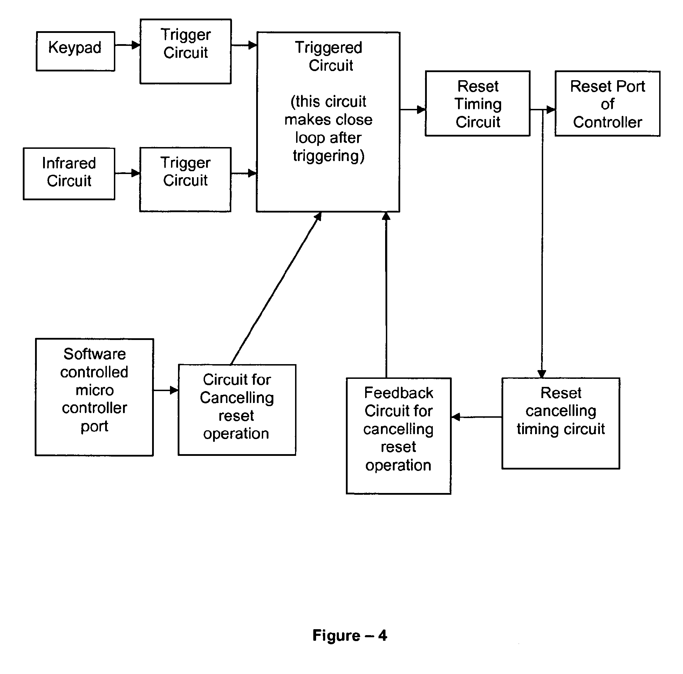

The present system may also be explained by means of block diagrams as depicted in Figure 4. The diagram represents a system in which whenever an input signal is received by the system of the present invention (via keyboard or remote control), the system tries to reset microcontroller from a hardware circuit. If microcomputer runs in normal stage, it prevents the reset operation; otherwise the reset operation is performed within the system.

## Claims

1. A circuit for controlling the reset operation of a microcontroller or microprocessor system, it comprising:
• means (Q8, Q13) for receiving input signals coming from one or more user interface devices, said input signals being able to determine reset conditions of said microcontroller or microprocessor system;
• means (D8, D9, Q2, Q7) for triggering the input signals received from said user interface devices and generating an activation signal for a reset port (Q1) of the microcontroller or microprocessor system, determining said reset operation;
• means (Q9,Q11,Q10,Q12) for enabling said triggering means on the basis of a status signal coming from said microcontroller or microprocessor system, said status signal being indicative of a failure status of the microcontroller or microprocessor system;
**characterized in that** said means for enabling the triggering means comprises;
• feedback means (Q9, Q11, Q10) receiving the activation signal for said reset port and generating a feedback signal for said enabling of said triggering means;
• input means (Q12) receiving said status signal enabling said feedback means to supply said feedback signal to said triggering means, when said status signal is indicative of a failure status;
• reset timing means (C4, R14), determining a reset timing delay for the activation of the reset port, and
• reset cancelling timing means (C2, R21) determining a reset cancelling timing delay for said feedback means.

2. A circuit according to claim 1 wherein; said user interface devices are remote devices or keypads.

3. A method for controlling the reset operation of a microcontroller or microprocessor system, comprising the following steps:
• receiving input signals coming from user interface devices, said input signals being able to determine reset conditions of said microcontroller or microprocessor system;
• triggering the input signals received from said user interface devices and generating an activation signal for a reset function of the microcontroller or microprocessor system, determining said reset operation;
• enabling said triggering on the basis of a status signal coming from said microcontroller or microprocessor system, said status signal being indicative of a failure status of the microcontroller or microprocessor system, wherein said step of enabling the triggering comprises the further steps of :

4. A method according to claim 3 wherein; said user interface devices are remote devices or keypads.
• receiving via feedback means (Q9, Q11, Q10) the activation signal for said reset port and generating a feedback signal for said enabling of said triggering means;
• receiving via input means (Q12) said status signal enabling said feedback means to supply said feedback signal to said triggering means, when said status signal is indicative of a failure status;
• determining via reset timing means (C4, R14) a reset timing delay for the activation of) the reset port.
• determining via reset cancelling timing means (C2, R21) a reset cancelling timing delay for said feedback means.

## Patentansprüche

1. Schaltung zum Steuern des Rücksetzvorgangs eines Mikrosteuerungs- oder Mikroprozessorsystems, Folgendes aufweisend:
• eine Einrichtung (Q8, Q13) zum Empfangen von Eingangssignalen, die von einem oder mehreren Benutzeroberflächengerät/en kommen, wobei die Eingangssignale Rücksetzbedingungen für das Mikrosteuerungs- oder Mikroprozessorsystem bestimmen können;
• eine Einrichtung (D8, D9, Q2, Q7) zum Auslösen der von den Benutzeroberflächengeräten her empfangenen Eingangssignale und zum Generieren eines Aktivierungssignals für einen Rücksetzanschluss (Q1) des Mikrosteuerungs- oder Mikroprozessorsystems, das den Rücksetzvorgang bestimmt;
• eine Einrichtung (Q9, Q11, Q10, Q12) zur Freigabe der Auslöseeinrichtung auf Grundlage eines vom Mikrosteuerungs- oder Mikroprozessorsystem kommenden Zustandssignals, wobei das Zustandssignal auf einen Fehlerzustand des Mikrosteuerungs- oder Mikroprozessorsystems hindeutet,
**dadurch gekennzeichnet, dass** die Einrichtung zur Freigabe der Auslöseeinrichtung umfasst:
• eine Rückkopplungseinrichtung (Q9, Q11, Q10), die das Aktivierungssignal für den Rücksetzanschluss empfängt und ein Rückkopplungssignal generiert, um die Auslöseeinrichtung freizugeben;
• eine Eingangseinrichtung (Q12), die das die Rückkopplungseinrichtung freigebende Zustandssignal empfängt, um das Rückkopplungssignal an die Auslöseeinrichtung weiterzuleiten, wenn das Zustandssignal auf einen Fehlerzustand hindeutet;
• eine Rücksetzzeitvorgabeeinrichtung (C4, R14), die eine Rücksetzzeitvorgabeverzögerung zur Aktivierung des Rücksetzanschlusses bestimmt; und
• eine Rücksetzaufhebungszeitvorgabeeinrichtung (C2, R21), die eine Rücksetzaufhebungszeitvorgabeverzögerung für die Rückkopplungseinrichtung bestimmt.

2. Schaltung nach Anspruch 1, wobei es sich bei den Benutzeroberflächengeräten um abgesetzte Geräte oder Tastaturen handelt.

3. Verfahren zum Steuern des Rücksetzvorgangs eines Mikrosteuerungs- oder Mikroprozessorsystems, folgende Schritte umfassend:
• Empfangen von Eingangssignalen, die von Benutzeroberflächengeräten kommen, wobei die Eingangssignale Rücksetzbedingungen für das Mikrosteuerungs- oder Mikroprozessorsystem bestimmen können;
• Auslösen der von den Benutzeroberflächengeräten her empfangenen Eingangssignale und Generieren eines Aktivierungssignals für eine Rücksetzfunktion des Mikrosteuerungs- oder Mikroprozessorsystems, das den Rücksetzvorgang bestimmt;
• Freigabe der Auslösung auf Grundlage eines vom Mikrosteuerungs- oder Mikroprozessorsystem kommenden Zustandssignals, wobei das Zustandssignal auf einen Fehlerzustand des Mikrosteuerungs- oder Mikroprozessorsystems hindeutet,
wobei der Schritt der Freigabe der Auslösung den folgenden weiteren Schritt umfasst:
• Empfangen des Aktivierungssignals für den Rücksetzanschluss über die Rückkopplungseinrichtung (Q9, Q11, Q10) und Generieren eines Rückkopplungssignals, um die Auslöseeinrichtung freizugeben;
• Empfangen des Zustandssignals über die Eingangseinrichtung (Q12), um die Rückkopplungseinrichtung dahingehend zu aktivieren, das Rückkopplungssignal an die Auslöseeinrichtung weiterzuleiten, wenn das Zustandssignal auf einen Fehlerzustand hindeutet;
• Bestimmen einer Rücksetzzeitvorgabeverzögerung über die Rücksetzzeitvorgabeeinrichtung (C4, R14) für die Aktivierung des Rücksetzanschlusses;
• Bestimmen einer Rücksetzaufhebungszeitvorgabeverzögerung für die Rückkopplungseinrichtung über die Rücksetzaufhebungszeitvorgabeeinrichtung (C2; R21).

4. Verfahren nach Anspruch 3, wobei es sich bei den Benutzeroberflächengeräten um abgesetzte Geräte oder Tastaturen handelt.

## Revendications

1. Circuit pour contrôler l'opération de réinitialisation d'un système de microcontrôleur ou microprocesseur, le circuit comprenant :
- des moyens (Q8, Q13) pour recevoir des signaux d'entrée provenant d'un ou plusieurs dispositifs d'interface utilisateur, lesdits signaux d'entrée étant aptes à déterminer les conditions de réinitialisation dudit système de microcontrôleur ou microprocesseur ;
- des moyens (D8, D9, Q2, Q7) pour déclencher les signaux d'entrée reçus desdits dispositifs d'interface utilisateur et générer un signal d'activation pour un port de réinitialisation (Q1) du système de microcontrôleur ou microprocesseur, déterminant ladite opération de réinitialisation ;
- des moyens (Q9, Q11, Q10, Q12) pour autoriser lesdits moyens de déclenchement sur la base d'un signal d'état provenant dudit système de microcontrôleur ou microprocesseur, ledit signal d'état étant indicateur d'un état de panne du système de microcontrôleur ou microprocesseur ;
**caractérisé en ce que** lesdits moyens d'autorisation des moyens de déclenchement comprennent :
- des moyens de réaction (Q9, Q11, Q10) recevant le signal d'activation pour ledit port de réinitialisation et générant un signal de réaction pour ladite autorisation desdits moyens de déclenchement;
- des moyens d'entrée (Q12) recevant ledit signal d'état activant lesdits moyens de réaction pour fournir ledit signal de réaction auxdits moyens de déclenchement, lorsque ledit signal d'état est indicateur d'un état de panne ;
- des moyens de temporisation de réinitialisation (C4, R14), déterminant un retard de réinitialisation pour l'activation du port de réinitialisation ; et
- des moyens de temporisation d'annulation de réinitialisation (C2, R21) déterminant un retard de synchronisation de réinitialisation pour lesdits moyens de réaction.

2. Circuit selon la revendication 1, dans lequel lesdits dispositifs d'interface utilisateur sont des télécommandes ou claviers.

3. Procédé pour contrôler l'opération de réinitialisation d'un système de microcontrôleur ou microprocesseur, le procédé comprenant les étapes consistant à :
- recevoir des signaux d'entrée en provenance de dispositifs d'interface utilisateur, lesdits signaux d'entrée étant aptes à déterminer les conditions de réinitialisation dudit système de microcontrôleur ou microprocesseur ;
- déclencher les signaux d'entrée reçus desdits dispositifs d'interface utilisateur et générer un signal d'activation pour une fonction de réinitialisation du système de microcontrôleur ou microprocesseur, déterminant ladite opération de réinitialisation ;
- permettre ledit déclenchement sur la base d'un signal d'état provenant dudit système de microcontrôleur ou microprocesseur, ledit signal d'état étant indicateur d'un état de panne du système de microcontrôleur ou microprocesseur ;
dans lequel ladite étape consistant à permettre le déclenchement comprend en outre les étapes consistant à :
recevoir par le biais de moyens de réaction (Q9, Q11, Q10) le signal d'activation pour ledit port de réinitialisation et générer un signal de réaction pour ladite autorisation desdits moyens de déclenchement;
recevoir par le biais de moyens d'entrée (Q12) ledit signal d'état permettant auxdits moyens de réaction de fournir ledit signal de déclenchement auxdits moyens de déclenchement, lorsque ledit état de signal est indicateur d'un état de panne ;
déterminer par le biais de moyens de temporisation de réinitialisation (C4, R14) un retard de réinitialisation pour l'activation du port de réinitialisation,
déterminer par le biais de moyens de temporisation d'annulation de réinitialisation (C2, R24), un retard d'annulation de réinitialisation pour lesdits moyens de réaction.

4. Procédé selon la revendication 3, dans lequel lesdits dispositifs d'interface utilisateur sont des télécommandes ou claviers.
